# EUROPÄISCHE PATENTANMELDUNG

(11) **EP 1 128 208 A1**
(43) Veröffentlichungstag der Anmeldung: **29.08.2001**
(21) Anmeldenummer: 01103958.3
(22) Anmeldetag: 19.02.2001
(51) Int. Cl.: G03B 21/132, G03B 21/16

(54) **Overheadprojektor**

(30) Priorität: 21.02.2000 DE 10007830
(71) Anmelder: Donner, Franz-Josef, 33175 Bad Lippspringe (DE)
(72) Erfinder: Donner, Franz-Josef, 33175 Bad Lippspringe (DE)
(74) Vertreter: LOUIS, PÖHLAU, LOHRENTZ & SEGETH

(57) **Zusammenfassung**

Gegenstand der Erfindung ist ein Overheadprojektor mit einem Basisteil (1; 21) mit Beleuchtungseinrichtung und einer Auflage (2; 22) für ein zu projizierendes Transparent, einem Spiegelausleger (3; 23) mit einer Fokussiereinrichtung (4; 24) und einem in der Neigung verstellbaren Umlenkspiegel, wobei in dem Basisteil (1; 21) unterhalb der Auflage (2; 22) eine Beleuchtungseinrichtung (26) mit einem oder mehreren Leuchtmitteln (6; 30) und einem Reflektor (7; 29) angeordnet ist, und die beim Betrieb des Overheadprojektor entstehende Wärme durch Strahlung und/oder Konvektion in ausreichendem Maß abtransportiert wird, und der Spiegelausleger (3; 23) vollständig im Basisteil (1; 21) versenkbar ist.

## Beschreibung

Die vorliegende Erfindung betrifft einen Overheadprojektor mit einem Basisteil mit Beleuchtungseinrichtung und einer Auflage für ein zu projizierendes Transparent, das gewöhnlich in Form einer Folie oder eines Dias vorliegt, einem Spiegelausleger mit einer Fokussiereinrichtung und einem in der Neigung verstellbaren Umlenkspiegel.

Overheadprojektoren sind weit verbreitet und finden vielfach Anwendung in Schulen, Universitäten und auf Konferenzen. Ihr besonderer Vorteil ist darin zu sehen, dass sie sehr flexibel einsetzbar sind. Insbesondere ist es möglich, Grafiken und auch Texte zur Projektion mit einem Overheadprojektor lange vor einem entsprechenden Vortrag vorzubereiten und vorzuhalten. Andererseits besteht die Möglichkeit, eine Folie während eines Vortrages zu beschreiben oder mit Skizzen zu versehen oder eine bereits vorbereitete Folie mit Text oder Skizzen zu ergänzen.

Overheadprojektoren basieren dabei auf dem Grundprinzip, dass als Abbildungsmedium eine transparente Folie verwendet wird, deren Transparenz mit einem mehr oder weniger abdeckenden und farbig veränderten Bild reduziert wird. Die Folie wird dabei von Licht durchleuchtet, dessen Strahlengang so gestaltet ist, dass das Bild der Folie vergrößert auf einer entsprechenden Wand bzw. Lichtbildwand erscheint.

In der einfachsten und daher auch am weitesten verbreiteten Ausgestaltung von Overheadprojektoren beginnt der Strahlengang senkrecht unterhalb der Folie. Er kann auch seitlich davon beginnen, muss dann allerdings über einen Spiegel umgelenkt werden. Wenn der Strahlengang senkrecht über der Folie beginnt, muss er direkt unterhalb der Folie gespiegelt werden, wobei insbesondere die letzte Ausgestaltung kleine und daher gut transportable Bauformen ermöglicht.

Bei sämtlichen der vorstehend beschriebenen Overheadprojektoren wird das zur Projektion erforderliche Licht im Allgemeinen von einer Lampe erzeugt und mit einer Kondensorlinse gebündelt. Dadurch und durch das aus Gründen der elektrischen Sicherheit geschlossene Gerätegehäuse entsteht viel Stauwärme, die nachteiligerweise über ein Gebläse abgeführt werden muss. Sofern die Lampe mit Niederspannung betrieben wird, ist ein entsprechender Transformator zur Wandlung der Netzspannung erforderlich. Beides, Gebläse und/oder der erforderliche Transformator sind von nicht unerheblichem Gewicht und machen einen Overheadprojektor unhandlich und verteuern zudem dessen Herstellung.

Die Bauformen der bisher bekannten Overheadprojektoren bedingen immer einen Tisch, auf dem sie betrieben werden können. In diesem Fall ist jedoch nur eine stehende, aber keine sitzende Betätigung des Overheadprojektors möglich. Häufig werden daher spezielle Gestelle angeboten, die gegebenenfalls in der Höhe variabel sind und somit eine sowohl sitzende als auch eine stehende Betätigung eines Overheadprojektors ermöglichen. Weiterhin ist der Spiegelausleger in der Mehrzahl der Fälle nachteiligerweise starr angeordnet, wobei er sich in einigen Fällen zur besseren Verstaubarkeit abklappen lässt.

Die der vorliegenden Erfindung zugrundeliegende Aufgabe ist die Schaffung eines weiteren Overheadprojektors, der zumindest einen Teil der aus dem Stand der Technik bekannten Nachteile überwindet und insbesondere technisch einfach und kostengünstig herstellbar ist. Er soll darüber hinaus möglichst einfach handzuhaben sein.

Diese Aufgabe wird durch einen eingangs beschriebenen Overheadprojektor dadurch gelöst, dass dieser mit einem Basisteil mit Beleuchtungseinrichtung und einer Auflage für ein zu projizierendes Transparent, einem Spiegelausleger mit einer Fokussiereinrichtung und einem in der Neigung verstellbaren Umlenkspiegel bestückt ist, wobei in dem Basisteil unterhalb der Auflage eine Beleuchtungseinrichtung mit einem oder mehreren Leuchtmitteln und einem Reflektor angeordnet ist, wobei die beim Betrieb des Overheadprojektors entstehende Wärme durch Strahlung und/oder Konvektion in ausreichendem Maß abtransportiert wird und der Spiegelausleger vollständig im Basisteil versenkbar ist.

Für den erfindungsgemäßen Overheadprojektor kann in einer bevorzugten Ausführungsform vorteilhafterweise auf einen Tisch oder ein spezielles Untergestell verzichtet werden, da er direkt auf dem Fußboden steht und bevorzugt so hoch ist, wie es für sitzendes Arbeiten erforderlich ist.

Daneben ist es selbstverständlich möglich die erfindungsgemäß erreichten Vorteile auch mit heute bereits bekannten und realisierten Bauformen zu verwirklichen. Dabei wird der erfindungsgemäße Overheadprojektor in der bisher üblichen Größe hergestellt und folglich auch auf übliche Weise eingesetzt, das heißt auf einen Tisch oder einem entsprechenden Untergestell oder Projektorwagen.

Aufgrund der Konstruktion ist eine Kondensorlinse nicht erforderlich, was in einer nicht unerheblichen Gewichtsreduzierung resultiert. Stattdessen wird erfindungsgemäß ein entsprechend der geometrischen Situation und des gewählten Leuchtmittels dimensionierter Reflektor eingesetzt. Hierbei ist es grundsätzlich möglich, die eingesetzten Leuchtmittel entsprechend den Wünschen und Anforderungen zu wählen, wobei nur der Reflektor anzupassen ist. Sollte eine Niederspannungslichtquelle eingesetzt werden, so erfolgt eine entsprechende Transformation der Netzspannung außerhalb des erfindungsgemäßen Overheadprojektors, wodurch dessen Herstellung vereinfacht und dessen Gewicht verringert wird. Geeignete Netzgeräte stehen in ausreichender Qualität und zu günstigen Preisen im Handel zur Verfügung und können überdies für verschiedene Zwecke eingesetzt werden.

Durch die bauliche und geometrische Ausgestaltung des erfindungsgemäßen Overheadprojektors ist auch eine Zwangslüftung mit einem Gebläse, wie sie üblicherweise in Geräten aus dem Stand der Technik vorgesehen ist, nicht erforderlich. Auch dies vereinfacht die Konstruktion und trägt zur Gewichtsersparnis bei.

In einer bevorzugten Weiterbildung des erfindungsgemäßen Overheadprojektors ist das Basisteil in der Höhe veränderbar. Hierdurch vervielfältigen sich die Einsatzmöglichkeiten des erfindungsgemäßen Overheadprojektors, da dieser im Sitzen und auch stehend bedient werden kann.

Sollten an einen Overheadprojektor auch besondere Anforderungen hinsichtlich seiner Beweglichkeit gestellt werden, so ist auch eine Ausführungsform denkbar, bei der Rollen an dem Basisteil angeordnet sind. Hierdurch lässt sich der Overheadprojektor leicht verschieben. Selbstverständlich können die Rollen dabei direkt am dem Basisteil befestigt werden oder z.B. an einem separaten Rollenrahmen bzw. - untersatz, auf den der Overheadprojektor aufgesetzt werden kann.

Die Funktionalität des erfindungsgemäßen Overheadprojektors lässt sich weiterhin dadurch erheblich steigern, dass an dem Basisteil wenigstens eine abnehmbare oder abklappbare Seitenablage und/oder Folienanschläge und/oder eine Folienvorratsrollenmechanik angeordnet werden.

In einer besonderen Ausführungsform ist es weiterhin möglich, in dem Basisteil ein Netzteil, je nach Auslegung des Projektors, mit oder ohne integriertem Trafo einzufügen, wobei auch hier die Möglichkeit besteht, eine Halterung für ein handelsübliches Netzteil vorzusehen.

Bei einer anderen, besonders bevorzugten Ausführungsform des erfindungsgemäßen Overheadprojektors weist das Basisteil die Form eines Quaders auf, wobei wenigstens auf zwei einander gegenüberliegenden Seiten im oberen Bereich des Basisteils Luftaustrittsöffnungen angeordnet sind. In dieser Ausführungsform ist die Unterseite des Quaders nicht verschlossen, so dass Luft von unten in das Basisteil eintreten kann, an der Beleuchtungseinrichtung vorbeistreicht, dort Wärme aufnimmt, nach oben steigt und das Basisteil durch die Luftaustrittsöffnungen verlässt. Hierbei entsteht durch die aufsteigende warme Luft ein Kamineffekt, der für eine effiziente Kühlung der Beleuchtungseinrichtung vollkommen ausreicht. Insbesondere kann auf eine technisch aufwendige und zusätzliche Kosten verursachende Zwangsbelüftung mittels Gebläse verzichtet werden.

Bei dieser Ausführungsform ist es bevorzugt, dass die Luftaustrittsöffnungen als Grifflöcher ausgebildet sind und somit eine zusätzliche Funktion bei der Veränderung der Position des Overheadprojektors oder seiner Höhe besitzen.

Die Höhe des Overheadprojektors lässt sich grundsätzlich auf zwei unterschiedliche Weisen verändern. Die erste Möglichkeit besteht darin, dass das Basisteil aus zwei ineinander verschiebbaren Baugruppen gebildet ist. Diese konstruktiv etwas aufwendigere Ausführung bietet sich besonders in Bereichen an, in denen eine häufigere Höhenverstellung des Overheadprojektors erforderlich ist bzw. gewünscht wird.

Eine zweite Möglichkeit zur Höhenveränderung besteht darin, dass das Basisteil auf ein entsprechend geformtes Verlängerungsstück aufsetzbar ist. Diese konstruktiv etwas einfachere Ausführungsform bietet die Option der Höhenveränderung, ist aufgrund ihrer konstruktiven Einfachheit aber kostengünstiger als die zuvor beschriebene Ausführungsform.

Selbstverständlich sind auch andere, z.B. runde, Formen für den erfindungsgemäßen Overheadprojektor möglich. Es besteht dann beispielsweise die Möglichkeit, den Korpus aus günstig erhältlichen Blechtonnen herzustellen, was eine äußerst günstige Produktion erlaubt.

In einer weiteren besonders bevorzugten Ausgestaltung des erfindungsgemäßen Overheadprojektors ist die in dem Basisteil unterhalb der Auflage angeordnete Beleuchtungseinrichtung mit Leuchtmittel und Reflektor durch Abstandselemente von der Auflage für das zu projizierende Transparent beabstandet und weist ein Blendschutzgitter auf. Diese Konstruktion ist besonders darin vorteilhaft, dass sie optisch nicht als wuchtiger Kasten in Erscheinung tritt, trotzdem eine Blendung der Zuhörer bzw. Zuschauer nicht zu befürchten ist und nur ein geringes Gewicht aufweist. Bei dieser Ausgestaltung ist bevorzugt, wenn die Abstandselemente als Teleskopsäulen ausgebildet sind, da auf diese Weise eine äußerst einfache Höhenveränderung realisierbar ist.

Es ist weiterhin bevorzugt, wenn die Auflage und die Beleuchtungseinrichtung lösbar mit den Abstandselementen verbunden sind. Hierdurch lässt sich der Overheadprojektor in wenige Einzelteile zerlegen und leicht transportieren sowie platzsparend verstauen.

Selbstverständlich ist auch die Anordnung eines Netzteils bei dieser Ausführung in dem Basisteil möglich. Bevorzugt wird es in der Beleuchtungseinrichtung montiert.

Nachfolgend wird die vorliegende Erfindung anhand von besonders bevorzugten Ausführungsbeispielen und unter Bezugnahme auf die beigefügten Figuren näher beschrieben. Dabei zeigt:
- Figur 1: eine schematische Darstellung einer Seitenansicht einer besonders bevorzugten Ausführungsform des erfindungsgemäßen Overheadprojektors;
- Figur 2: eine gegenüber Figur 1 weiter vereinfachte Darstellung zur Verdeutlichung der Höhenverstellbarkeit des erfindungsgemäßen Overheadprojektors;
- Figur 3: eine weitere vereinfachte Darstellung der Ausführungsform gemäß Figur 1, bei der die Höhenverstellung durch Aufsetzen auf ein entsprechend geformtes Verlängerungsstück bewirkt wird;
- Figur 4: eine schematische Perspektivdarstellung einer weiteren, besonderen Ausführungsform des erfindungsgemäßen Overheadprojektors; und
- Figur 5: eine stark vereinfachte schematische Darstellung einer Seitenansicht des Overheadprojektors gemäß Figur 4.

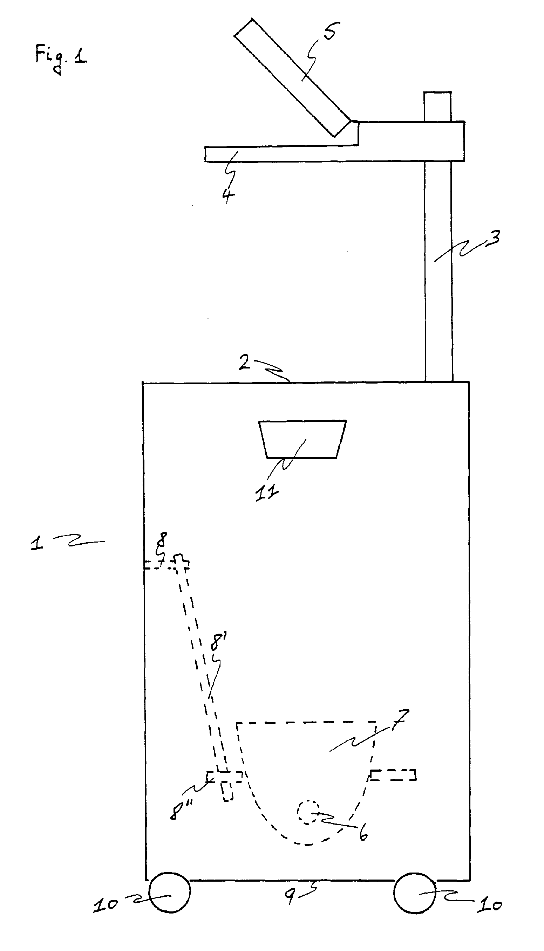

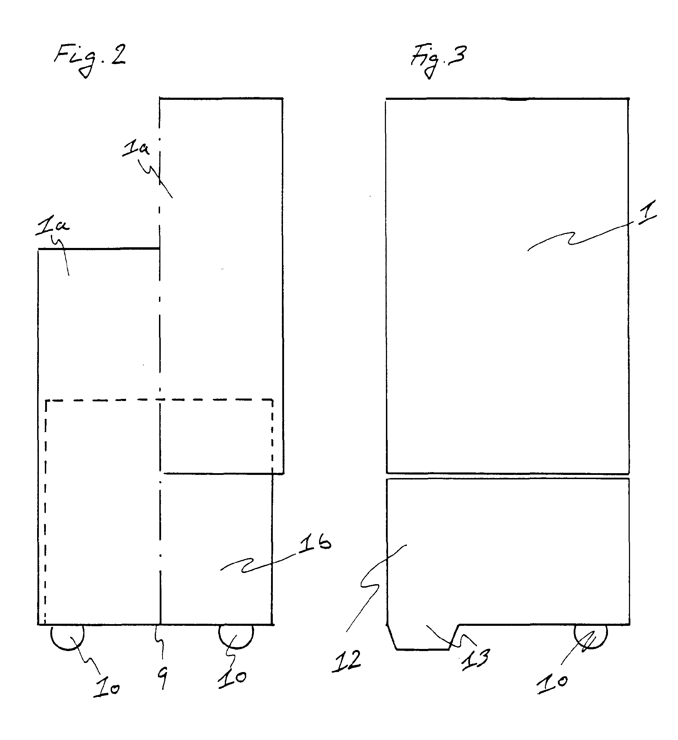

Figur 1 zeigt eine erste, besonders bevorzugte Ausführungsform des erfindungsgemäßen Overheadprojektors mit einem Basisteil 1 mit Beleuchtungseinrichtung und einer Auflage 2 für ein zu projizierendes Transparent, einem Spiegelausleger 3 mit einer Fokussiereinrichtung 4 und einem in der Neigung verstellbaren Umlenkspiegel 5. Innerhalb des Basisteils 1 ist eine Beleuchtungseinrichtung 26 bestehend aus Leuchtmittel 6, Reflektor 7 und Befestigungselementen 8, 8' und 8" gestrichelt dargestellt. Die Unterseite 9 ist bevorzugt offen, mit einem Gitter abgedeckt oder weist ausreichend dimensionierte Belüftungsöffnungen auf.

In einer bevorzugten Ausführungsform sind an dem Basisteil 1 Rollen 10 angeordnet, damit der erfindungsgemäße Overheadprojektor leicht zu bewegen ist. In der dargestellten Ausführungsform befindet sich eine Luftaustrittsöffnung 11 in Form eines Grifflochs im oberen Abschnitt des Basisteils 1.

Aufgrund der erfindungsgemäßen Konstruktion ist keine Zwangsbelüftung mit einem Gebläse oder dergleichen erforderlich. Dies ist besonders vorteilhaft, da hierdurch Gewicht und Kosten eingespart werden können. Auch eine Geräuschbelästigung durch ein laufendes Gebläse ist nicht zu befürchten.

Figur 2 zeigt, sehr vereinfacht, eine Weiterbildung der vorstehend beschriebenen Ausführungsform des erfindungsgemäßen Overheadprojektors, bei der das Basisteil aus zwei Baugruppen 1a und 1b besteht, wobei die Baugruppe 1a in der Höhe verschiebbar angeordnet ist. Dem auf dem vorliegenden Gebiet tätigen Fachmann stehen zur Realisierung dieser Verschiebbarkeit der Baugruppe 1a allgemein bekannte Mittel zur Verfügung, so dass es keiner näheren Erläuterung derselben bedarf. In der dargestellten Ausführungsform sind an der Unterseite 9 des Basisteils 1 ebenfalls Rollen 10 angeordnet.

Die in Figur 3 dargestellte Ausführungsform zeigt eine Alternative zu der vorbeschriebenen Art der Höhenverstellung des erfindungsgemäßen Overheadprojektors. Das Basisteil 1 ist dabei auf einem Verlängerungsstück 12 aufgesetzt. Auch sind in dieser Figur zwei grundsätzliche Möglichkeiten der Gestaltung des Fußbereichs dargestellt. Außer Rollen 10 ist selbstverständlich auch das Vorsehen von Füßen 13 möglich. Dabei können, bevorzugt bei ortsfestem Einsatz des Overheadprojektors, ausschließlich Füße vorgesehen sein. Es ist aber auch möglich, Füße 13 und Rollen 10 nebeneinander vorzusehen, wie in Figur 3 dargestellt.

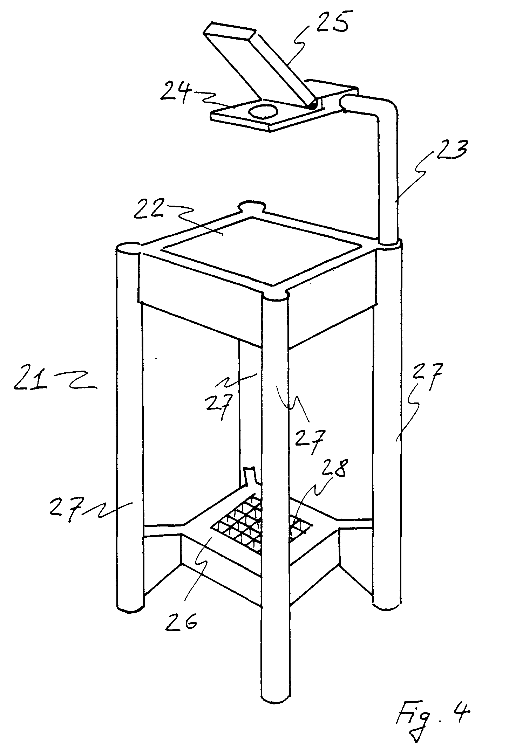

Figur 4 zeigt eine weitere, besonders bevorzugte Ausführungsform des erfindungsgemäßen Overheadprojektors mit einem Basisteil 21 mit Beleuchtungseinrichtung 26 und einer Auflage 22 für ein zu projizierendes Transparent, einem Spiegelausleger 23 mit einer Fokussiereinrichtung 24 und einem in der Neigung verstellbaren Umlenkspiegel 25. In dem Basisteil 21 ist unterhalb der Auflage 22 eine Beleuchtungseinrichtung 26 mit einem Leuchtmittel und einem Reflektor angeordnet.

In der dargestellten Ausführungsform ist die Beleuchtungseinrichtung 26 von der Auflage 22 durch Abstandselemente 27 beabstandet. Die Beleuchtungseinrichtung 26 weist weiterhin ein Blendschutzgitter 28 auf. Aus der vorliegenden Darstellung ist sofort ersichtlich, dass aufgrund der freien Strecke zwischen Auflage 22 und Beleuchtungseinrichtung 26 kein Gebläse zur Kühlung erforderlich ist. Weiterhin ergibt sich bei einer Ausbildung der Abstandselemente 27 als Teleskopsäulen, dass der erfindungsgemäße Overheadprojektor auch in der vorliegenden Ausführungsform einfach in der Höhe zu verstellen ist.

In einer Fortbildung ist die vorliegende Ausführungsform des Overheadprojektors zerlegbar ausgestaltet. Insbesondere ist vorgesehen, die Auflage 22 und die Beleuchtungseinrichtung 26 von den Abstandselementen 27 lösbar auszuführen, so dass ein Transport und eine platzsparende Lagermöglichkeit mit nur sechs Einzelteilen möglich ist.

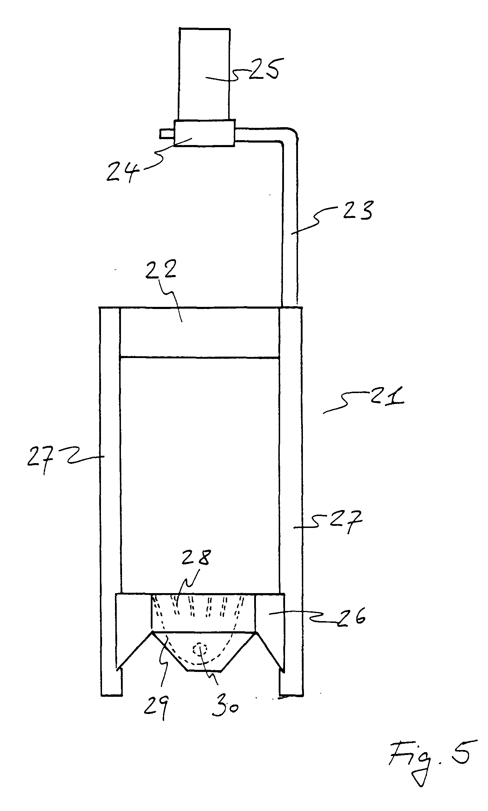

Die in Figur 5 dargestellte, stark vereinfachte schematische Seitenansicht der in Figur 4 dargestellten Ausführungsform des erfindungsgemäßen Overheadprojektors zeigt nochmals die wesentlichen Bauelemente dieser Ausführungsform. Dabei sind übereinstimmende Bauelemente mit denselben Bezugszeichen bezeichnet worden wie in Figur 4. Gestrichelt ist in der Beleuchtungseinrichtung 26 noch der Reflektor 29 und das Leuchtmittel 30 in der jeweiligen Anordnung in der Beleuchtungseinrichtung 26 dargestellt. Selbstverständlich besteht auch die Möglichkeit der Integration eines Netzgerätes innerhalb der Beleuchtungseinrichtung 26. Ebenfalls ist eine bewegliche Ausgestaltung dieser Ausführungsform mittels Rollen oder eines mit Rollen versehenen Untersatzes möglich.

## Patentansprüche

1. Overheadprojektor mit
einem Basisteil (1; 21) mit Beleuchtungseinrichtung und einer Auflage (2; 22) für ein zu projizierendes Transparent,
einem Spiegelausleger (3; 23) mit einer Fokussiereinrichtung (4; 24) und einem in der Neigung verstellbaren Umlenkspiegel (5; 25)
dadurch gekennzeichnet, dass in dem Basisteil (1; 21) unterhalb der Auflage (2; 22) eine Beleuchtungseinrichtung (26) mit einem oder mehreren Leuchtmitteln (6; 30) und einem Reflektor (7; 29) angeordnet ist,
die beim Betrieb des Overheadprojektor entstehende Wärme durch Strahlung und/oder Konvektion in ausreichendem Maß abtransportiert wird und
der Spiegelausleger (3; 23) vollständig im Basisteil (1; 21) versenkbar ist.

2. Overheadprojektor gemäß Anspruch 1,
dadurch gekennzeichnet, dass das Basisteil (1; 21) in der Höhe veränderbar ist.

3. Overheadprojektor gemäß Anspruch 1 oder 2,
dadurch gekennzeichnet, dass an dem Basisteil (1; 21) Rollen (10) zum Verschieben des Overheadprojektors angeordnet sind.

4. Overheadprojektor gemäß einem der Ansprüche 1-3,
dadurch gekennzeichnet, dass an dem Basisteil (1; 21) wenigstens eine abnehmbare oder abklappbare Seitenablage und/oder Folienanschläge und/oder eine Folienvorratsrollenmechanik angeordnet sind.

5. Overheadprojektor gemäß einem der vorhergehenden Ansprüche,
dadurch gekennzeichnet, dass ein Netzteil in das Basisteil (1; 21) integriert ist.

6. Overheadprojektor gemäß einem der vorhergehenden Ansprüche,
dadurch gekennzeichnet, dass das Basisteil (1) die Form eines Quaders aufweist, wobei wenigstens auf zwei einander gegenüberliegenden Seiten im oberen Bereich des Basisteils (1) Luftaustrittsöffnungen (11) angeordnet sind.

7. Overheadprojektor gemäß Anspruch 6,
dadurch gekennzeichnet, dass die Luftaustrittsöffnungen (11) als Grifflöcher ausgebildet sind.

8. Overheadprojektor gemäß einem der vorhergehenden Ansprüche,
dadurch gekennzeichnet, dass das Basisteil (1) aus zwei zur Veränderung der Höhe ineinander verschiebbaren Baugruppen gebildet ist.

9. Overheadprojektor gemäß einem der Ansprüche 1-7,
dadurch gekennzeichnet, dass das Basisteil (1; 21) zur Veränderung der Höhe auf ein entsprechend geformtes Verlängerungsstück (12) aufsetzbar ist.

10. Overheadprojektor gemäß einem der Ansprüche 1-5,
dadurch gekennzeichnet, dass die in dem Basisteil (21) unterhalb der Auflage (22) angeordnete Beleuchtungseinrichtung (26) mit Leuchtmittel (30) und Reflektor (29) durch Abstandselemente (27) von der Auflage (22) beabstandet ist und ein Blendschutzgitter (28) aufweist.

11. Overheadprojektor gemäß Anspruch 10,
dadurch gekennzeichnet, dass die Abstandselemente (27) als Teleskopsäulen ausgebildet sind.

12. Overheadprojektor gemäß Anspruch 10 oder 11,
dadurch gekennzeichnet, dass die Auflage (22) und die Beleuchtungseinrichtung (26) lösbar mit den Abstandselementen (27) verbunden sind.

13. Overheadprojektor gemäß einem der Ansprüche 10-12,
dadurch gekennzeichnet, dass das in dem Basisteil (21) integrierte Netzteil in der Beleuchtungseinrichtung (26) angeordnet ist.
